# EUROPÄISCHE PATENTSCHRIFT

(11) **EP 2 200 884 B1**
(45) Veröffentlichungstag und Bekanntmachung des Hinweises auf die Patenterteilung: **26.01.2011**
(21) Anmeldenummer: 08804653.7
(22) Anmeldetag: 24.09.2008
(51) Int. Cl.: B61L 27/00, G06Q 10/00

(54) **VERFAHREN ZUR FAHRPLANGENERIERUNG FÜR VERKEHRSSYSTEME MIT BERÜCKSICHTIGUNG ZEITLICHER SCHRANKEN**
METHOD FOR CREATING TIMETABLES FOR TRANSPORTATION SYSTEMS TAKING INTO ACCOUNT TIME LIMITS
PROCÉDÉ D'ÉTABLISSEMENT D'HORAIRES DE CIRCULATION DE SYSTÈMES DE TRANSPORT AVEC PRISE EN COMPTE DE LIMITES TEMPORELLES

(30) Priorität: 27.09.2007 DE 102007047474
(43) Veröffentlichungstag der Anmeldung: 30.06.2010
(73) Patentinhaber: Siemens Aktiengesellschaft, 80333 München (DE)
(72) Erfinder: ERHARD, Karl-Heinz, 38126 Braunschweig (DE)
(74) Vertreter: Wolff, Harry
(86) Internationale Anmeldenummer: PCT/EP2008/062744
(87) Internationale Veröffentlichungsnummer: WO 2009/043770

(56) Entgegenhaltungen:
- EP-A- 0 933 280
- EP-A- 1 293 948
- EP-A- 1 764 280
- WO-A-97/09218
- WO-A-03/097425
- TSCHORN S: "Trassenmanagement und -marketing für freien Netzzugang" SIGNAL + DRAHT, TELZLAFF VERLAG GMBH. DARMSTADT, DE, Bd. 93, Nr. 5, 1. Mai 2001 (2001-05-01), Seiten 6-9, XP002279395 ISSN: 0037-4997

## Beschreibung

Die Erfindung betrifft die computergestützte, automatische Generierung von Fahrplänen für Verkehrssysteme. Das Verfahren kann sowohl offline zur Fahrplankonstruktion - im Rahmen von Planungstools - als auch online zur Fahrplandisposition - als Bestandteil von Leitsystemen - eingesetzt werden. Die Erfindung erweitert das in der DE-Patentanmeldung Nr. 19533127 beschriebene Verfahren zur Fahrplangenerierung. Mit dem beanspruchten Verfahren werden insbesondere obere Zeitschranken als betriebliche Randbedingungen berücksichtigt.

Bestehende, automatische Verfahren zur Fahrplangenerierung kann man in zwei Klassen einteilen:
- Inkrementelle Verfahren gehen vom aktuellen Offline-oder Online-Fahrplan aus und nehmen lediglich lokale Änderungen an diesem Fahrplan vor. Die Entscheidung, welche Fahrplananpassung durchgeführt werden soll, erfolgt z.B. mit Hilfe einer Wissensbasis [H. Schaefer et al, An Expert System for Real-Time Train Dispatching, Railway Operations, Computers in Raitways 4, Volume 2, COMPRAIL 94, T. Murthy et al (editors), Computational Mechanics Publications, Southampton, ISBN 1-85312-359-5, S.27 bis 34, 1994.] oder durch Optimierungsverfahren, z.B. Branch-and-Bound-Algorithmus gemäß [R.Sauder, Computer Aided Train Dispatching: Decision Support through Optimization, INTERFACES 13,5.24 bis 37, 1993.].
- Konstruktive Verfahren berechnen ausgehend von den betrieblichen Randbedingungen, z.B. geplante Passagierhalte, Fahrzeugprioritäten, und ggf. den Ist-Standorten der Fahrzeuge einen völlig neuen Fahrplan. In [K.-H. Erhard, U. Lauther: Verfahren zur Regelung von Verkehrsmitteln, DE-Patentanmeldung 19533127] kommen hier schnelle Heuristiken basierend auf Graphmodellen-und -algorithmen zum Einsatz.

Die bekannten Verfahren berücksichtigen gewisse untere Zeitschranken, z.B. dass das Fahrzeug bei einem Passagierhalt nicht vor der geplanten Abfahrtszeit losfahren darf. Obere Zeitschranken werden aktuell nicht berücksichtigt. Ein typisches Beispiel für die Berücksichtigung oberer Zeitschranken ist die begrenzte Dienstzeit des Fahrpersonals, welche nach Möglichkeit nicht überschritten werden soll. Andernfalls entstehen erhebliche Betriebskosten und zusätzliche Verspätungen aufgrund des erforderlichen Personalwechsels bei außerplanmäßigen Ablösestellen.

Der Erfindung lag die Aufgabe zugrunde, das bekannte Verfahren zur Fahrplangenerierung um die Möglichkeit der Berücksichtigung oberer Zeitschranken zu erweitern.

Erfindungsgemäß wird dazu ein nichtlineares Strafkosten-Modell, d. h. Pönalen-Modell, verwendet.

Das zugrunde liegende Verfahren ist konstruktiv und erzeugt den neuen Fahrplan schrittweise, indem die zu planenden Fahrten zuerst nach Priorität sortiert und dann einzeln verplant werden; Für die Planung einer einzelnen Fahrt werden die noch freien Trassen - Zeitlücken für Streckenabschnitte - durch einen Intervallgraphen repräsentiert und mit der Anwendung eines Kürzeste-Wege-Algorithmus auf diesem Graphen eine optimierte Route berechnet. Dabei werden nicht nur topologische, sondern auch zeitliche Alternativen, insbesondere Überholungen und Begegnungen, vollständig berücksichtigt. Als zu minimierender Zielfunktionswert wird eine gewichtete Verspätungssumme aller Fahrzeuge betrachtet. Der Gewichtungsfaktor ist umso größer, je höher die Priorität des Fahrzeugs ist.

Nachteilig an dem bekannten Basisverfahren ist die Eigenschaft, dass bereits verplante Fahrten nicht mehr verändert werden können. Eine noch freie Trasse darf für eine Nachfolgefahrt also nur verwendet werden, wenn ihr Zeitbereich hinreichend groß ist zur Aufnahme der Fahrzeit und ggf. geplanten Wartezeit. Das kann dazu führen, dass obere Zeitschranken für später verplante Züge verletzt werden.

Um diesen Nachteil aufzuheben, wird im erfindungsgemäßen Verfahren gemäß einer ersten Modellerweiterung die Verwendung einer freien Trasse generell zugelassen und mit einem geeigneten Wert pönalisiert. Der Pönalenwert wird zum Zielfunktionswert der betrachteten Lösung addiert. Damit kann jedes bereits verplante Fahrzeug prinzipiell durch nachfolgend verplante Fahrzeuge verdrängt werden. Bei der Berechnung der Pönale werden folgende Fälle unterschieden:
1. Die geplante Fahrt durch die Trasse ist ohne Verdrängung möglich: In diesem Fall ist der Pönalenwert 0.
2. Zur Durchführung der Fahrt auf der gewählten Trasse müssen andere Fahrzeuge verdrängt, d.h. verspätet, werden: Hier wird die zusätzliche Verspätung der anderen Fahrzeuge ermittelt und auf den Zielfunktionswert addiert. Um den unterschiedlichen Fahrzeugprioritäten Rechnung zu tragen, wird der Verspätungsaufschlag mit dem jeweiligen Gewichtungsfaktor der verdrängten Fahrten multipliziert.

Eine zweite Modellerweiterung besteht nun darin, dass für die Trassen jenseits der oberen Zeitschranken ein zusätzlicher, besonders großer Pönalenwert - bigM-Methode - vorgesehen wird. Dieser Wert ist größer als der Maximalwert der mölichen Lösungen ohne Berücksichtigung des bigM-Wertes. Ohne Verwendung dieses Wertes könnte es passieren, dass eine Lösung mit Verletzung der Schranke erzeugt wird, obwohl eine zulässige Lösung existieren würde.

Ausgehend von diesen Modellerweiterungen werden folgende praktische Verfahrensschritte zur Planung einer neuen Fahrt vorgeschlagen:
a) Berechne die kürzeste Route auf dem Intervallgraphen unter Berücksichtung der individuellen Pönalenwerte der einzelnen, noch freien Trassen
b) Prüfe den Zielfunktionswert der erhaltenen Lösung.
   b1) Wenn der Wert kleiner als bigM ist, dann wird keine obere Zeitschranke verletzt. In diesem Fall ist die erhaltene Lösung zulässig. Wenn in der gewählten Lösung einige Fahrzeuge verdrängt werden müssen, werden deren Fahrten entsprechend aktualisiert. Wenn nach diesem Update eine obere Zeitschranke für ein verdrängtes Fahrzeug verletzt ist, dann wird wie in Schritt b2 vorgegangen.
   b2) Wenn der Wert größer oder gleich bigM ist, ist die Lösung aufgrund der Verletzung von Zeitschranken unzulässig. In diesem Fall wird eine geeignete Alternativlösung bestimmt. Im konkreten Fall einer Überschreitung der Dienstzeit des Fahrpersonals wird die Ablösestelle in Richtung des aktuellen Standortes des Fahrzeugs verlegt.

Das vorgeschlagene Strafkosten-Modell kann in ähnlicher Weise zur Berücksichtigung unterer Zeitschranken verwendet werden. Wenn z.B. ein Fahrzeug an einem bestimmten Standort nicht vor einer bestimmten Zeit ankommen soll, dann würde man die Trassen, welche zeitlich vor diesem Zeitpunkt liegen, mit dem Wert bigM beaufschlagen.

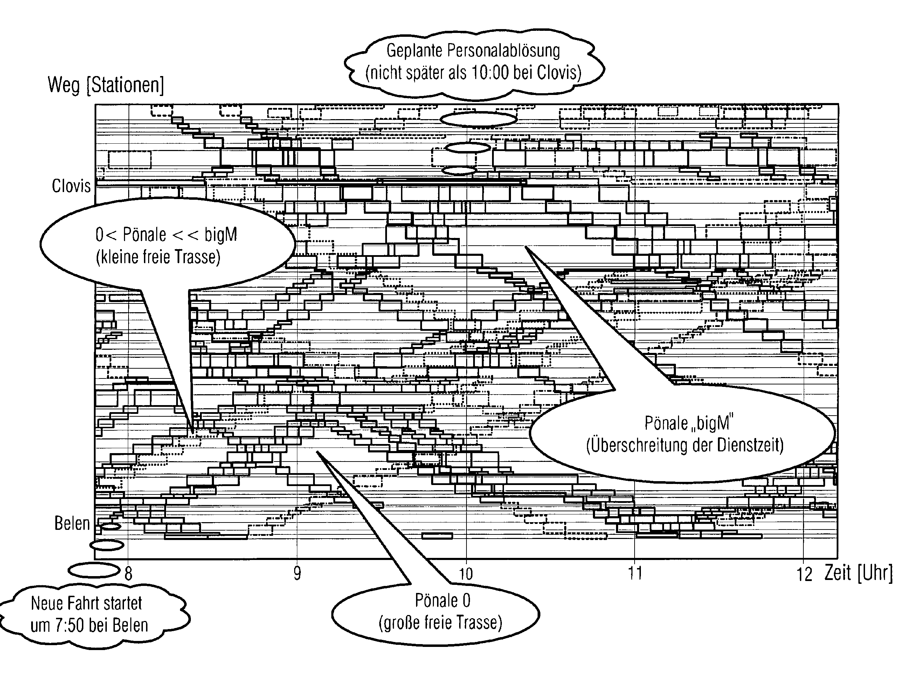

Die Erfindung soll an einem Ausführungsbeispiel anhand des in der Zeichnung dargestellten Weg-Zeit-Diagramms näher erläutert werden.

Im dargestellten Weg-Zeit-Diagramm ist auf der x-Achse die Zeit zwischen 8 und 12 Uhr, auf der y-Achse der Weg mit Angabe der Bahnhöfe aufgetragen.

Eine Fahrt besteht aus einer Abfolge von Zeitintervallen. Jedes Zeitintervall beschreibt die Belegung eines bestimmten Streckenabschnitts - z.B. Fahrstraße - durch ein bestimmtes Fahrzeug. Die weißen Felder zwischen diesen Intervallen sind die noch freien Trassen, welche für die Planung der nächsten Fahrt verwendet werden können.

Nun wird angenommen, dass unten links - bei Station Belen - eine neu einzuplanende Fahrt um 7:50 Uhr startet und um spätestens 10 Uhr in der Mitte oben - bei Station Clovis - eine Personalablösung stattfinden soll. Zur Berücksichtigung dieser oberen Zeitschranke wird folgendes Strafkosten-Modell aufgestellt:
- Freie Trassen, welche im linken Teil, nämlich vor 10 Uhr, liegen, werden mit einer positiven Pönale kleiner als bigM beaufschlagt, wenn deren Zeitbereich so klein ist, dass die Verwendung der Trasse für die zu planende Fahrt eine Verdrängung, d. h. Verspätung, bereits geplanter Fahrten nach sich ziehen würde. Wenn keine Verdrängung erforderlich ist, erfolgt keine Pönalisierung.
- Die freien Trassen im rechten Teil, nämlich nach 10 Uhr, werden mit der besonders großen Pönale bigM beaufschlagt.

Diese Modellierung führt dazu, dass der Kürzeste-Wege-Algorithmus nach Möglichkeit eine Route durch die freien Trassen bestimmt, bei der das Fahrzeug spätestens um 10 Uhr in Clovis ankommt. Wenn das Fahrzeug bereits so stark verspätet ist, dass selbst die Verdrängung sämtlicher bestehender Fahrten eine Überschreitung der maximal zulässigen Dienstzeit verursacht, dann würde die erhaltene Lösung eine Trasse rechts von 10 Uhr verwenden und somit in einem Zielfunktionswert größer als bigM resultieren. In diesem Fall würde das Verfahren die Verschiebung der Ablösestelle in Richtung des Startbahnhofs vorschlagen.

Durch die Einführung des erfindungsgemäßen Strafkosten-Modells zur Berücksichtigung von Zeitschranken für die Fahrplangenerierung ergeben sich folgende Vorteile:
- Die Güte der erhaltenen Lösung im Sinne des Zielfunktionswertes wird gegenüber dem bekannten Verfahren weiter verbessert, da durch die potentielle Verdrängung bereits verplanter Fahrten der betrachtete Lösungsraum deutlich vergrößert wird.
- Die Ermittlung einer zulässigen Lösung erfolgt sehr effizient innerhalb von nur einem Berechnungsvorgang, d.h. Backtracking ist nicht erforderlich.
- Die Verwendung oberer Zeitschranken dient beispielsweise zur Vermeidung der Überschreitung von Dienstzeiten. Daraus ergeben sich erhebliche Kosteneinsparungen für den Kunden.
- Untere Zeitschranken können z.B. dazu verwendet werden, dass eine Überfüllung von Standorten mit beschränkter Fahrzeug-Kapazität, z. B. Depots, vermieden wird.
- Die Kombination von unteren und oberen Zeitschranken kann zur Just-ln-Time-PIanung verwendet werden, z.B. für eine optimierte Lagerhaltung der transportierten Güter.

Da ein bestehendes, konstruktives Verfahren zur Fahrplangenerierung erweitert wird, werden dessen Vorteile übernommen:
- Der konstruktive Ansatz erlaubt eine möglichst globale Optimierung der Fahrpläne.
- Das Verfahren ist für generelle Verkehrsnetze einsetzbar, nicht nur für Verkehrslinien.
- Die Berechnung zulässiger und optimierter Fahrpläne erfolgt durch die Verwendung schneller Heuristiken besonders effizient, was den Einsatz des Verfahrens nicht nur für Offline- sondern auch für Online-Anwendungen ermöglicht.

## Patentansprüche

1. Verfahren zur Fahrplangenerierung für Verkehrssysteme mit Berücksichtigung zeitlicher Schranken,
**gekennzeichnet durch** folgende Verfahrensschritte:
- die zu planenden Fahrten werden nach Priorität sortiert und dann einzeln verplant,
- für die Planung einer einzelnen Fahrt werden die noch freien Trassen - Zeitlücken für Streckenabschnitte - **durch** einen Intervallgraphen repräsentiert und mit der Anwendung eines Kürzeste-Wege-Algorithmus auf diesem Graphen wird eine optimierte Route berechnet, wobei nicht nur topologische, sondern auch zeitliche Alternativen, insbesondere Überholungen und Begegnungen, vollständig berücksichtigt werden,
- als zu minimierender Zielfunktionswert wird eine gewichtete Verspätungssumme aller Fahrzeuge betrachtet, wobei der Gewichtungsfaktor umso größer ist, je höher die Priorität des Fahrzeugs ist,
- die Verwendung einer freien Trasse wird generell zugelassen und mit einem geeigneten Wert pönalisiert, wodurch jedes bereits verplante Fahrzeug prinzipiell **durch** nachfolgend verplante Fahrzeuge verdrängt werden kann,
- der Pönalenwert wird zum Zielfunktionswert der betrachteten Lösung addiert.

2. Verfahren nach Anspruch 1,
**dadurch gekennzeichnet,**
**dass** im Fall, dass die geplante Fahrt durch die Trasse ohne Verdrängung möglich ist, der Pönalenwert gleich 0 ist.

3. Verfahren nach Anspruch 1,
**dadurch gekennzeichnet,**
**dass** im Fall, dass zur Durchführung der Fahrt auf der gewählten Trasse andere Fahrzeuge verdrängt, d.h. verspätet, werden müssen, die zusätzliche Verspätung der anderen Fahrzeuge ermittelt und auf den Zielfunktionswert addiert wird, wobei je nach Fahrzeugpriorität der Verspätungsaufschlag mit dem jeweiligen Gewichtungsfaktor der verdrängten Fahrten multipliziert wird.

4. Verfahren nach Anspruch 1,
**dadurch gekennzeichnet,**
**dass** gemäß einer Modellerweiterung für die Trassen jenseits der oberen Zeitschranken ein zusätzlicher, besonders großer Pönalenwert - bigM-Wert - vorgesehen wird, wobei dieser Wert größer ist als der Maximalwert der möglichen Lösungen ohne Berücksichtigung des bigM-Wertes.

## Claims

1. Method for creating timetables for transportation systems taking into account time limits,
**characterized by** the following method steps:
- the journeys to be planned are sorted according to priority and then scheduled individually,
- an individual journey is planned by representing the railroad lines which are still free - time headways for route sections - using an interval chart, and a shortest-distance algorithm is applied to said chart in order to calculate an optimized route, wherein not only topological but also chronological alternatives, particularly instances of overtaking and meeting, are fully taken into account,
- the target functional value to be minimized which is considered is a weighted delay total for all vehicles, the weighting factor being greater the higher the priority of the vehicle,
- the use of a free railroad line is permitted generally and is penalized with a suitable value, as a result of which each already scheduled vehicle can, in principle, be displaced by subsequently scheduled vehicles,
- the penalty value is added to the target functional value for the solution under consideration.

2. Method according to Claim 1,
**characterized**
**in that** if the planned journey by the railroad line is possible without displacement, the penalty value is equal to 0.

3. Method according to Claim 1,
**characterized**
**in that** if making the journey on the chosen railroad line requires other vehicles to be displaced, i.e. delayed, the additional delay to the other vehicles is ascertained and is added to the target functional value, wherein, depending on the vehicle priority, the delay supplement is multiplied by the respective weighting factor for the displaced journeys.

4. Method according to Claim 1,
**characterized**
**in that** on the basis of a model expansion an additional, particularly large penalty value - bigM value - is provided for the railroad lines beyond the upper time limits, said value being greater than the maximum value of the possible solutions without taking account of the bigM value.

## Revendications

1. Procédé d'établissement d'horaires de trajet pour des systèmes de circulation en tenant compte de limites temporelles,
**caractérisé par** les stades de procédé suivants :
- on trie suivant une priorité les voyages à planifier et on les planifie ensuite individuellement,
- pour la planification d'un voyage individuel, on représente les tracés - intervalles de temps encore libres pour des sections de voie par des graphes d'intervalles et, en utilisant un algorithme de trajet le plus court sur ce graphe, on calcule un itinéraire optimisé en prenant en compte complètement non seulement des possibilités topologiques mais aussi temporelles, notamment des dépassements et des rencontres,
- on considère comme valeur de fonction cible à minimiser une somme pondérée de retard de tous les véhicules, le facteur de pondération étant d'autant plus grand que la priorité du véhicule est plus grande,
- l'utilisation d'un tracé libre est autorisé en général et pénalisé d'une valeur appropriée, chaque véhicule déjà planifiés pouvant ainsi en principe être refoulé par des véhicules planifiés ensuite,
- la valeur de pénalité est ajoutée à la valeur de fonction cible de la solution considérée.

2. Procédé suivant la revendication 1,
**caractérisé en ce que**
dans le cas où le voyage planifié est possible par le tracé sans refoulement la valeur de pénalité est égale à 0.

3. Procédé suivant la revendication 1,
**caractérisé en ce que**
dans le cas où pour effectuer le voyage sur le tracé sélectionné d'autres véhicules doivent être refoulés, c'est-à-dire retardés, le retard supplémentaire des autres véhicules est déterminé et est ajouté à la valeur de fonction cible, l'augmentation du retard en fonction de la priorité du véhicule étant multipliée par le facteur de pondération respectif des voyages refoulés.

4. Procédé suivant la revendication 1,
**caractérisé en ce que** l'on prévoit, suivant un élargissement du modèle, pour les tracés au-delà des limites temporelles supérieures, une valeur de pénalité supplémentaire particulièrement grande - valeur bigM - cette valeur étant plus grande que la valeur maximum des solutions possibles sans tenir compte de la valeur bigM.
